(19)

**Europäisches Patentamt**
**European Patent Office**
**Office européen des brevets**

(11) **EP 4 757 274 A1**

(12) **EUROPEAN PATENT APPLICATION**

(43) Date of publication:
**10.06.2026 Bulletin 2026/24**

(21) Application number: **25213535.5**

(22) Date of filing: **05.11.2025**

(51) International Patent Classification (IPC):
$H04L\ 47/20^{(2022.01)}$ $\quad H04L\ 47/22^{(2022.01)}$
$H04L\ 47/10^{(2022.01)}$ $\quad H04L\ 47/31^{(2022.01)}$
$H04L\ 47/62^{(2022.01)}$ $\quad H04L\ 47/11^{(2022.01)}$

(52) Cooperative Patent Classification (CPC):
**H04L 47/20; H04L 47/22; H04L 47/29; H04L 47/31;**
**H04L 47/622;** H04L 47/11

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **03.12.2024 FI 20246411**

(71) Applicant: **Nokia Solutions and Networks Oy**
**02610 Espoo (FI)**

(72) Inventors:
- **DE SCHEPPER, Koen**
  **Boortmeerbeek (BE)**
- **CHANG, Chia-Yu**
  **Zwijndrecht (BE)**
- **BOLETTIERI, Simone**
  **Antwerp (BE)**

(74) Representative: **Nokia EPO representatives**
**Nokia Technologies Oy**
**Karakaari 7**
**02610 Espoo (FI)**

(54) **METHOD AND APPARATUS FOR CONTROL OF FLOW RATES**

(57)    A network node comprises at least one queue for storing received packets, wherein the packets include first packets belonging to at least one first flow and second packets belonging to at least one second flow. A scheduler schedules transmission of the stored packets via at least one network link and extracts the stored packets from the in at least one queue based on the scheduled transmission. A policer marks some of the first packets with a congestion indicator before transmission. The network node is configured to: determine respective serving rates for the at least one first flow and the at least one second flow, a serving rate being determined for a flow and indicating a rate with which packets of the considered flow are extracted by the scheduler; compute, for a flow among the at least one first flow, a respective target serving rate to converge to, wherein a target serving rate for a flow is computed based on the serving rates; and configure the policer with a policer parameter for controlling an amount of packets to be marked in a flow among the at least one first flow, wherein the policer parameter is based on the target serving rate determined for the considered flow.

FIG. 1A

EP 4 757 274 A1

**Description**

TECHNICAL FIELD

Various example embodiments relate generally to a network node adapted for flow rate control and a method for flow rate control.

BACKGROUND

In a network node, a scheduler may be used to schedule transmission of packets stored in one or more queues. Some of the flows may be prioritized with respect to the other, for example L4S traffic may be prioritized over Classic traffic to minimize latency. Further the L4S rate may be controlled via an ECN policer that marks L4S packets with congestion indicators.

It is desirable to provide a flow rate control approach adapted for a scheduler with prioritization.

SUMMARY

The scope of protection is set out by the appended claims. The embodiments, examples and features, if any, described in this specification that do not fall under the scope of protection are to be interpreted as examples useful for understanding the various embodiments or examples that fall under the scope of protection.

According to a first aspect, a network node comprises: at least one queue for storing received packets, wherein the packets include first packets and second packets, wherein the first packets belong to at least one first flow, wherein the second packets belong to at least one second flow; a scheduler configured to schedule transmission of the stored packets via at least one network link and to extract the stored packets from the in at least one queue based on the scheduled transmission; a policer configured to mark some of the first packets with a congestion indicator before transmission; means for determining respective serving rates for the at least one first flow and the at least one second flow, a serving rate being determined for a flow and indicating a rate with which packets of the considered flow are extracted by the scheduler; means for computing, for at least one flow among the at least one first flow, a respective target serving rate to converge to, wherein a target serving rate for a flow is computed based on the serving rates; means for configuring the policer with a policer parameter for controlling an amount of packets to be marked in a flow among the at least one first flow, wherein the policer parameter is based on the target serving rate determined for the considered flow.

The network node may comprise: means for detecting a contention for at least one of the at least one second flow; means for detecting an overuse for at least one of the at least one first flow. The target serving rate for a flow among the at least one first flow may either be equal to a maximum serving rate configured for the at least one first flow when no contention and no overuse are detected or otherwise equal to a limited serving rate proportional to a target serving rate weight configured for the flow among the at least one first flow.

The network node may comprise: means for computing respective normalized serving rates for the at least one first flow and the at least one second flow. A normalized serving rate computed for a given flow may be equal to the serving rate of the given flow divided by the target serving rate weight configured for the given flow. The limited serving rate may be equal to a target normalized serving rate multiplied by the target serving rate weight configured for the flow among the at least one first flow. The target normalized serving rate may be computed based one or more of the normalized serving rates.

The network node may comprise: means for computing a first target normalized serving rate from the normalized serving rate(s) of the at least one first flow and a second target normalized serving rate from the normalized serving rate(s) of the at least one second flow.

The target normalized serving rate may be either the minimum of the first and second target normalized serving rates when contention is detected and overuse is not detected or the first target normalized serving rate when no contention is detected and overuse is detected.

The first target normalized serving rate may be the maximum of the normalized serving rates of the at least one first flow, multiplied by the maximum serving rate and divided by a total serving rate for the at least one first flow.

The second normalized serving rate may be equal to the maximum of the normalized serving rates of the at least one second flow.

The means for detecting an overuse may be configured to detect an overuse by comparing a total serving rate for the at least one first flow with the maximum serving rate.

The means for detecting a contention may be configured to detect a contention in a given flow when the at least one queue accumulates, for the given flow, a number of packets greater than a threshold.

The means for detecting a contention may be configured to detect a contention when the sum of the serving rates determined for the at least one first flow and the at least one second flow is above an upper transmission capacity configured of the at least one network link.

The network node may comprise: means for determining dynamically a capacity of the at least one network link. The upper transmission capacity may be determined by applying a threshold to the capacity.

The policer may include at least one virtual queue for processing packets of the at least one first flow and the policer parameter is a policer rate for the at least one virtual queue.

The policer may include a probability marker and the policer parameter may be a marking probability for the probability marker.

The scheduler may be configured to schedule transmission of the stored packets via at least one network link with priority for the at least one first flow with respect to the at least one second flow.

The means of the network node may comprise: at least one processor; at least one memory storing instructions that, when executed by the at least one processor, cause the network node to perform the functions defined for the network node.

According to a second aspect a method for use by a network node comprising a scheduler, a policer and at least one queue is disclosed. the method comprises: storing packets in the at least one queue, wherein the packets include first packets and second packets, wherein the first packets belong to at least one first flow, wherein the second packets belong to at least one second flow; scheduling, by the scheduler, transmission of the stored packets via at least one network link and extracting the stored packets from the in at least one queue based on the scheduled transmission; marking, by the policer, some of the first packets with a congestion indicator before transmission; determining respective serving rates for the at least one first flow and the at least one second flow, a serving rate being determined for a flow and indicating a rate with which packets of the considered flow are extracted by the scheduler; computing, for at least one flow among the at least one first flow, a respective target serving rate to converge to, wherein a target serving rate for a flow is computed based on the serving rates; configuring the policer with a policer parameter for controlling an amount of packets to be marked in a flow among the at least one first flow, wherein the policer parameter is based on the target serving rate determined for the considered flow.

The method may comprise: detecting a contention for at least one of the at least one second flow; detecting an overuse for at least one of the at least one first flow. The target serving rate for a flow among the at least one first flow may either be equal to a maximum serving rate configured for the at least one first flow when no contention and no overuse are detected or otherwise equal to a limited serving rate proportional to a target serving rate weight configured for the flow among the at least one first flow.

The method may comprise: computing respective normalized serving rates for the at least one first flow and the at least one second flow. A normalized serving rate computed for a given flow is equal to the serving rate of the given flow divided by the target serving rate weight configured for the given flow. The limited serving rate may be equal to a target normalized serving rate multiplied by the target serving rate weight configured for the flow among the at least one first flow. The target normalized serving rate may be computed based one or more of the normalized serving rates.

The method may comprise: computing a first target normalized serving rate from the normalized serving rate(s) of the at least one first flow and a second target normalized serving rate from the normalized serving rate(s) of the at least one second flow.

The target normalized serving rate may be either the minimum of the first and second target normalized serving rates when contention is detected and overuse is not detected or the first target normalized serving rate when no contention is detected and overuse is detected.

The first target normalized serving rate may be the maximum of the normalized serving rates of the at least one first flow, multiplied by the maximum serving rate and divided by a total serving rate for the at least one first flow.

The second normalized serving rate may be equal to the maximum of the normalized serving rates of the at least one second flow.

Detecting an overuse may comprise detecting an overuse by comparing a total serving rate for the at least one first flow with the maximum serving rate.

Detecting a contention may comprise detecting a contention in a given flow when the at least one queue accumulates, for the given flow, a number of packets greater than a threshold.

Detecting a contention may comprise detecting a contention when the sum of the serving rates determined for the at least one first flow and the at least one second flow is above an upper transmission capacity configured of the at least one network link.

The method may comprise: determining dynamically a capacity of the at least one network link. The upper transmission capacity is determined by applying a threshold to the capacity.

The policer may include at least one virtual queue for processing packets of the at least one first flow and the policer parameter is a policer rate for the at least one virtual queue.

The policer may include a probability marker and the policer parameter is a marking probability for the probability marker.

The scheduler may be configured to schedule transmission of the stored packets via at least one network link with

priority for the at least one first flow with respect to the at least one second flow.

According to another aspect, an apparatus comprises means adapted for performing one or more or all steps of any method disclosed herein. The means may for example include at least one processor and at least one memory storing instructions that, when executed by the at least one processor, cause the apparatus to perform one or more or all steps of any method disclosed herein. The means may include circuitry (e.g., processing circuitry) configured to perform one or more or all steps of any method disclosed herein.

According to another aspect, an apparatus comprises at least one processor and at least one memory storing instructions that, when executed by the at least one processor, cause the apparatus to carry out one or more or all steps of any method disclosed herein. The instructions, when executed by the at least one processor, may cause the apparatus to perform one or more or all steps of any method disclosed herein.

According to another aspect, a computer program comprises instructions that, when executed by an apparatus, cause the apparatus to one or more or all steps of any method disclosed herein. The instructions may cause the apparatus to perform one or more or all steps of any method disclosed herein.

According to another aspect, a non-transitory computer readable medium comprises computer program instructions stored thereon for causing an apparatus to carry out one or more or all steps of any method disclosed herein. The computer program instructions may cause the apparatus to perform one or more or all steps of any method disclosed herein.

BRIEF DESCRIPTION OF THE DRAWINGS

Example embodiments will be more fully understood from the detailed description given herein below and the accompanying drawings, which are given by way of illustration only and thus are not limiting of this disclosure.

FIG. 1A shows a simplified block diagram of a network node according to an example.

FIG. 1B is a flowchart illustrating a method for flow rate control according to an example.

FIG. 2 shows a simplified block diagram of a network node according to an embodiment #1 with a dual queue node where a virtual queue-based marker is used as an ECN policer to mark L4S traffic.

FIG. 3 shows a simplified block diagram of a network node according to an embodiment #2 with a dual queue node where a probability-based marker is used as an ECN policer to mark L4S traffic.

FIG. 4 shows a simplified block diagram of a network node according to an embodiment #3 which generalizes the embodiment #1 of FIG. 2 to a multi flows node where each flow has a dedicated queue and a Virtual queue-based marker per L4S flow is used as an ECN policer.

FIG. 5 shows a simplified block diagram of a network node according to an embodiment #4 which generalizes the embodiment #2 of FIG. 3 to a multi flows node where each flow has a dedicated queue and a probability-based marker per L4S flow is used as an ECN policer.

FIG. 6 shows a simplified block diagram of a network node according to an embodiment #5 which generalizes the embodiment of FIG. 4 to a generic prioritized and non-prioritized type of traffic and supports multiple flows, multiple queues and multiple priority levels.

FIG. 7 is a flowchart illustrating a method for flow rate control according to an example.

FIG. 8 is a block diagram illustrating an exemplary hardware structure of an apparatus for a network node according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

DETAILED DESCRIPTION

Detailed example embodiments are disclosed herein. However, specific structural and/or functional details disclosed herein are merely representative for purposes of describing example embodiments and providing a clear understanding of the underlying principles. However, these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

L4S is an architecture that allows elastic applications to experience extremely low latency by minimizing the network queueing delay without sacrificing throughput. L4S removes the need for the network to use large queues while controlling the rate of L4S traffic. L4S repurposes the congestion indicators (Explicit Congestion Notification (ECN) flags) and leverages a combination of marking strategies, in the network, and scalable L4S-compatible congestion control, in the applications. L4S allows frequent ECN marking and L4S applications uses the extent of ECN marking (i.e. congestion intensity) to finely adjust their sending rates.

It is desirable to provide scheduling-level congestion isolation mechanisms to minimize L4S latency and implement a proper L4S ECN packet marking strategy to timely inform L4S traffic sources of the available capacity of a network node. Access nodes (such as cellular base station or WiFi access point) are typically the most constrained network nodes where it is most important to implement proper L4S handling. In short, if the arrival rate of traffic at a queue of a network node is lower than the queue serving rate, then the queueing latency can be minimized, where the arrival rate at the queue depends on the sending rate of one or a set of traffic sources (i.e. applications). L4S enables the network to perform a finer (than with non-L4S) rate control of application sending rates as L4S applications finely adjust their sending rate as a function of the received congestion indicators allowing in turn queueing latency to be minimized.

A method for flow rate control based on congestion marking of the flows is disclosed. The method for flow rate control supports multi flows, multi-queues, multi-priority levels embodiments.

The method for flow rate control is implemented by a network node. A network node may be a stand-alone computing device or a distributed computing system which is itself interconnected via one or more communication links to one or more other network nodes. A network node may be for example: a router, a switch, a hub, a gateway, an access node (or access point), a controller node, a server, a base station, a user equipment, etc.

A network node of a telecommunication network may be:

- an end point (e.g., a user equipment, a printer, a radio receiver, a radio transmitter, etc) for data transmissions or redistribution;
- an intermediate point (e.g., a gateway, a router, a switch, etc) for data transmissions or redistribution, e.g., in a code network or an access network;
- a network entity, e.g., in the core network, that is configured to perform various functions on a control plane and / or user plane.

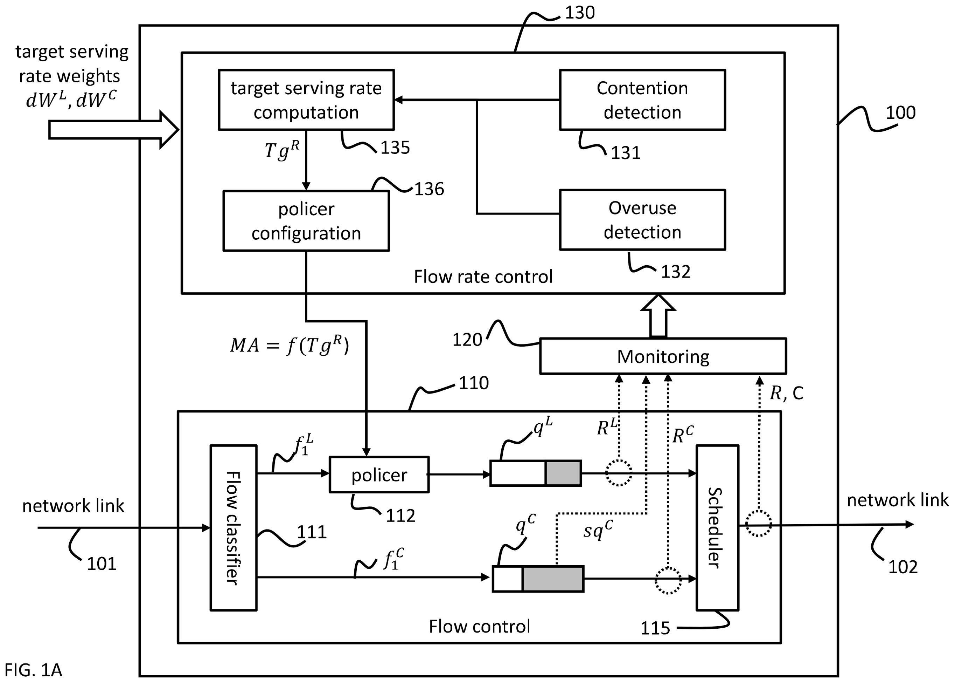

FIG. 1A shows a simplified block diagram of a network node 100 adapted for flow rate control according to an example.

The network node 100 receives input packets via at least one first (input) network link 101 and transmit at least some of these input packets via at least one second (output) network link 102.

The network node 100 includes a set 110 of processing blocks for performing flow rate control, the set 110 of processing blocks including: a scheduler 115, a policer (e.g., ECN policer) 112 and one or more queues $q^C$, $q^L$ adapted for storing the received packets.

The policer (e.g., ECN policer) 112 is configured to mark some of the packets received by the policer with a congestion indicator before transmission via the network link 102.

Each packet belongs to a flow. A flow may be characterized by a source and destination: a flow is typically transmitted between a specific source (sender) and a destination (receiver). A flow may consist of packets belonging to a specific application, service, or protocol, such as a video stream, file transfer, or web browsing session. Flows may have specific requirements such as bandwidth, latency, jitter, or reliability. Flows are often managed to ensure efficient utilization of resources, avoid congestion, and maintain fairness among users. This may involve techniques like traffic shaping, prioritization, or routing optimization. Flows may be identified and differentiated using various parameters, e.g., depending on the context. Flows may be identified and differentiated using IP (Internet Protocol) parameters such as the 5-tuple: source IP address, destination IP address, source port, destination port, and protocol type. As another example of parameter, differentiated Services Code Point (DSCP) is a parameter for classifying and managing network traffic and providing quality of service (QoS) classification in Layer 3 IP networks. As another example, ECN bits can be used to identify flows supporting L4S.

In embodiments, multiple categories of traffic (e.g., categories of service) are considered herein and a category of traffic may be assigned to each of the flows. For example, in embodiments based on priority levels, a first category of traffic includes all prioritized flows (e.g., L4S flows, corresponding to one or more first priority levels) and a second category of traffic includes all non-prioritized flows (e.g., Classic flows, corresponding to one or more second priority levels, where each of the second priority levels is lower than each of the first priority levels).

The packets received and processed by the policer (only part of these packets being marked by a congestion indicator) belong to a first category of traffic noted L while the other packets (that are never marked by the policer, but could be marked by other mechanisms outside the scope of the present patent application) belong to a second category of traffic noted C. In embodiments based on priority levels, the category L may correspond to prioritized flows (e.g., L4S flows) and the category C may correspond to non-prioritized flows (e.g., Classic flows).

The received packets may be stored in the one or more queues $q^C$, $q^L$ under control of a flow classifier 111. A given queue may be used for storing packets of one or more flows. Optionally, each queue can be equipped with an AQM. The selection of the queue in which to store packets of a flow may be performed by the flow classifier 111 in various manners. The selection may for example be performed based on the category of traffic assigned to the flow (e.g., based on priority level of the flow) such that a given queue stores only packets belonging to a given category of traffic (e.g., a given priority level).

In some embodiments, a queue may be used per category of traffic (e.g., per priority level in embodiments based on priority levels). For example, in the simplified example illustrated by FIG. 1A, a first queue $q^L$ is used for the flow $f_1^L$ in category L (e.g., L4S flows), and a second queue $q^C$ is used for the flow $f_1^C$ in category C (e.g., Classic flows). However, this example is only for illustrative purposes.

In other embodiments, multiple flows per category (L and/or C) can exist and a dedicated queue may be used per each flow per category such that all its packets are stored in the same queue and extracted by the scheduler for transmission. In other embodiments, a single queue may be used to store packets of multiple flows of a same category (L or C). Any other criterion adapted for assigning flows to queues may be used.

These principles and the embodiments of the flow rate control method disclosed herein can be applied to any type of category traffic on which a marking is applied, whether the marked traffic is assigned a higher priority level or not. To simplify the description and understanding, it will be assumed herein that the marked traffic belonging to category L is the prioritized traffic (e.g., L4S flows) and that the non-marked traffic belonging to category C is the non-prioritized traffic (e.g., Classic flows).

In embodiments based on priority levels, the category L includes all prioritized flows (e.g., L4S flows) having one or more first priority levels and the category C includes all non-prioritized flows (e.g., Classic flows) having one or more second priority levels, where each of the second priority levels is lower than each of the first priority levels. Then, the packets in category L are scheduled for transmission with priority with respect to packets in category C.

Also, in the mathematical notations used herein, the superscript L will be used for parameters associated with the traffic category L while the superscript C will be used for parameters associated with the traffic category C.

The scheduler 115 is configured to schedule transmission of the packets stored in the one or more queues $q^C$, $q^L$ via a network link 102 and to extract the stored packets from the one or more queues $q^C$, $q^L$ based on the scheduled transmission.

In this context, the rate with which packets of a flow are extracted from a queue is designated herein as the serving rate of the flow. In FIG. 1A, $R^C$ is the serving rate for the non-prioritized flow and $R^L$ is serving rate for the prioritized flow. The serving rates of the various flows may be measured, computed or otherwise determined by a monitoring block 120.

A serving rate (whether a target serving rate, aggregate serving rate, measured serving rate, potential serving rate etc) may be defined as a serving resource rate, i.e., a serving rate in terms of resources. The considered resources may be PRBs, bits, packets, symbols, etc, such that the serving rate is defined by a number of served resources per time unit. A PRB (Physical Resource Block) may be defined as a time-frequency resource in a physical layer of a wireless communication system. The definition of the resource units can be link-specific and may depend on the nature of the network link 102 through which the transmission is to be performed.

The scheduler 115 may use various scheduling solutions to schedule transmission of the stored packets. The scheduling solutions may be configured to minimize (or even avoid) queueing latency and/or prioritize some flows compared to other flows. The prioritized flows are the flows belonging to the category L where the other flows belong to category C. In embodiments based on priority levels assigned to flows, the prioritized flows may be the flows with the highest priority (e.g., with one or more high priority level(s)) where the other flows have lower priority (e.g., one or more lower priority levels). The flow rate control methods disclosed herein are applicable to all these cases.

As an example, a first scheduling solution is based on strict priority. In such a case, the prioritized traffic takes absolute precedence, and lower priority traffic is served only if the higher priority traffic has no pending packets. Thus, the serving rate of the prioritized traffic (typically) equals to the arrival rate (what arrives is served first) with a cap serving rate corresponding to the link capacity. Multiple levels of priority may be assigned to the flows, where the highest the priority the more the precedence.

As another example, a second scheduling solution is based on relative priority, e.g., when the scheduler is a "blocking scheduler" or "resource-based scheduler". In such a case, prioritized traffic is served more often and/or for longer time than the lower priorities. Weights may be defined to control the ratio between the serving rates to be applied by the scheduler 115 to the prioritized traffic compared to the non-prioritized traffic. Thus, the serving rate of the prioritized traffic is the minimum between the arrival rate of the prioritized traffic (the scheduler cannot serve more than what it receives) and the serving rate the scheduler applies to the prioritized traffic.

Whatever the scheduling solution used by the scheduler 115, flow rate control methods are disclosed herein to make sure that the amount of arriving prioritized traffic is controlled via a policer parameter adapted for controlling an amount of marked packets (hereafter, the marking amount) that allows to comply with or converge to a target serving rates assigned to the flows. When the arrival rate of the prioritized traffic is lower than the serving rate, queuing can be avoided.

The target serving rate may vary dynamically. The target serving rate may be lower than the "potential" serving rate applied by the scheduler. For example, the target serving rate for a flow might vary depending on the dynamics of the flows (e.g. if the serving rate of a flow is too high then the target serving rate might get lower to mark more aggressively, and vice versa).

The serving rates of the flows belonging to the traffic category L are controlled by configuring the congestion marking amount so as to avoid the starvation of the flows belonging to the traffic category C and by enforcing the target serving rate weights on traffic flows while still prioritizing the flows belonging to the traffic category L and using congestion marking for the flows belonging to the traffic category L.

To compute and configure the policer parameter adapted to control the amount of packets to be marked, a set 130 of computation blocks may be used for flow rate control. In the example of FIG. 1A, the set 130 of computation blocks includes: a contention detection block 131, an overuse detection block 132, a target serving rate computation block 135 and a policer configuration block 136. Any other architecture of computation blocks may be used.

The set 130 of computation blocks is configured to compute, for a flow in category L, a respective target serving rate ($Tg^R$) to converge to and to configure the policer with a policer parameter adapted to control an amount of packets $MA = f(Tg^R)$ to be marked in the considered flow. The policer parameter may not define any number of packets to be marked but may correspond to a marking probability (e.g., per time unit) or policer rate (e.g., per time unit) and the exact number of marked packets depends on the number of the packets processed and the value of the policer parameter.

Depending on the implementation of the policer (e.g., ECN policer), the marking amount may be configured by configuring: a policer rate for a virtual queue of the policer or a probability for a probability marker, etc.

In embodiments, the target serving rate for a flow is computed based on the serving rates determined for the flows in category L or C. The policer parameter adapted to control the amount of packets to be marked in a flow is based on the target serving rate ($Tg^R$) determined for the considered flow. The marking amount in a flow is determined to cause convergence of the serving rate of the considered flow to the target serving rate computed for the flow.

The proposed method allows to compute a target serving rate and corresponding marking amount for the policer in the context of network node with a scheduler that prioritizes a category of traffic and uses a policer to control the arriving rate of the prioritized traffic by congestion indicators.

The target serving rate and corresponding marking amount may be derived and dynamically updated from the measured serving rates of the prioritized traffic and non-prioritized traffic, for example per time slot or periodically (e.g., every $T_{rpt}$). When the target serving rate $Tg^R$ and the marking amount are dynamically updated, they can be adapted to the current traffic.

This allows also to dynamically detect when non-prioritized traffic is starving and/or when non-prioritized traffic is treated unfairly and/or when prioritized traffic is exceeding an aggregate (resource) rate limit.

In embodiments, target serving rate weights ($dW^L$, $dW^C$) are configured for the flows in the category L or C for balancing the respective serving rates of these flows. Based on these weights, the target serving rate ($Tg^R$) for a flow belonging to category L may be determined so as to comply with the configured target serving rate weight, e.g., to be proportional to the target serving rate weight of the flow. A target normalized serving rate $S_t$ may be configured or computed to determine the value of the target serving rate ($Tg^R$) for a flow by multiplying the target normalized serving rate $S_t$ with the target serving rate weight $dW^L$ of the flow: e.g., $Tg^R = dW^L * S_t$.

By configuring target serving rate weights, weighted resource fairness between categories of traffic can be controlled and achieved. An operator may for example configure a target serving rate weight per traffic category (and optionally per individual queue or flow in a multi-queue per traffic category embodiment). Then the target serving rate may be adapted such that the desired weight ratio between traffic rates (and optionally the traffic rates of individual flows or queues in a multi-queue per traffic category embodiment) is (on the long run) enforced when both traffic categories coexist. The operator can influence the desired rate balance between prioritized and non-prioritized traffic, and between different prioritized traffic flows, while still allowing L traffic to be prioritized (even strictly) by the scheduler.

In embodiments, it may be detected (i) if a contention happens for at least one of the flows in category C and (ii) if an overuse happens for at least one of the flows in category L. Based on these detections, the target serving rate ($Tg^R$) for a flow belonging to category L may be specifically adapted to the situation of contention or, respectively, overuse.

In embodiments, the target serving rate ($Tg^R$) for a flow belonging to category L is (i) either equal to a maximum serving rate ($dR^L$) when no contention and no overuse are detected (ii) or otherwise equal to a limited serving rate proportional to the target serving rate weight ($dW^L$) configured for the flow.

Based on the detections and the target serving rate weights, a target serving rate ($Tg^R$) may be adapted to any amount of traffic received and scheduled by the scheduler. Advantage is to limit prioritized traffic rate only when necessary, allowing prioritized to exploit bandwidth unused by lower priority traffic.

The maximum serving rate ($dR^L$) may be an aggregate rate limit to be enforced for the traffic in category L (e.g., prioritized traffic). Thus the serving rate of this category of traffic may be limited to create headroom. Aggregate resource limit also ensures creating enough aggregate headroom, which guarantees low latency under varying link rates.

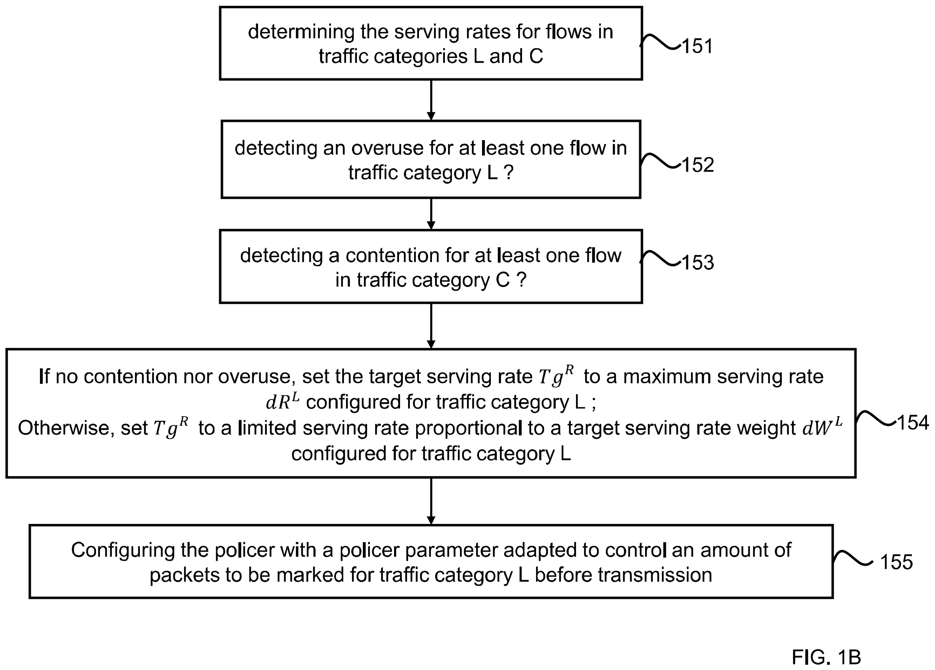

FIG. 1B shows a flowchart of a method for computing a policy parameter adapted for controlling a marking amount. The steps of the method may be implemented by any network node according to FIG. 1A.

While the steps are described in a sequential manner, the person skilled in the art will appreciate that some steps may be omitted, combined, performed in different order and / or in parallel.

For simplicity, a network node 100 is considered where L4S traffic (traffic category L) and Classic traffic (traffic category C) are handled by two different queues, $q^L$ and $q^C$, where $q^L$ serves all L4S packet of all L4S flows and $q^C$ serves all Classic packets of all Classic flows, and a priority scheduler prioritizes the L4S flows in the L4S queue (e.g. via strict or relative priority).

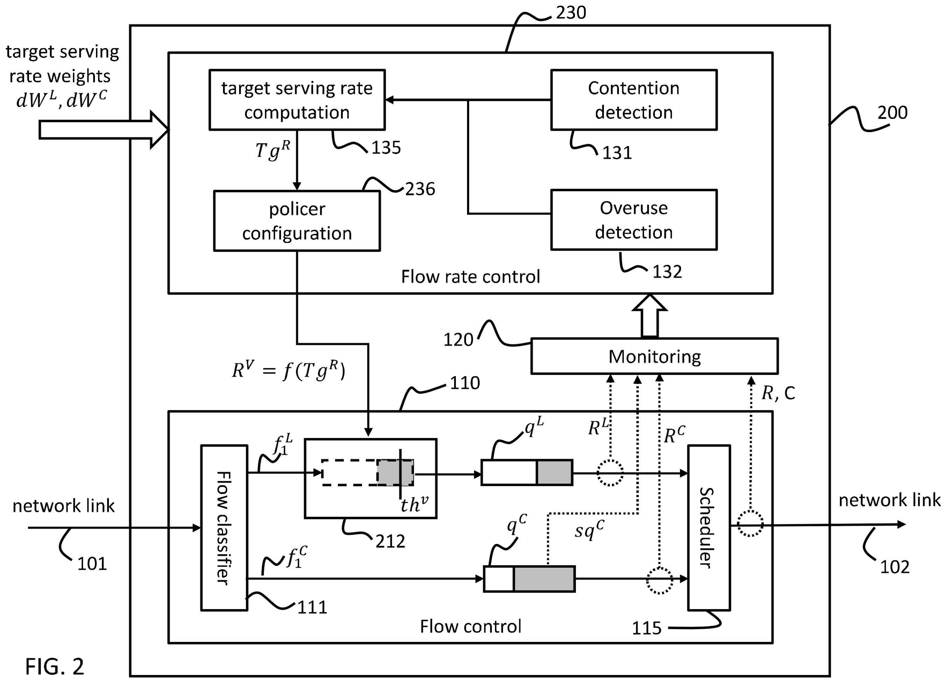

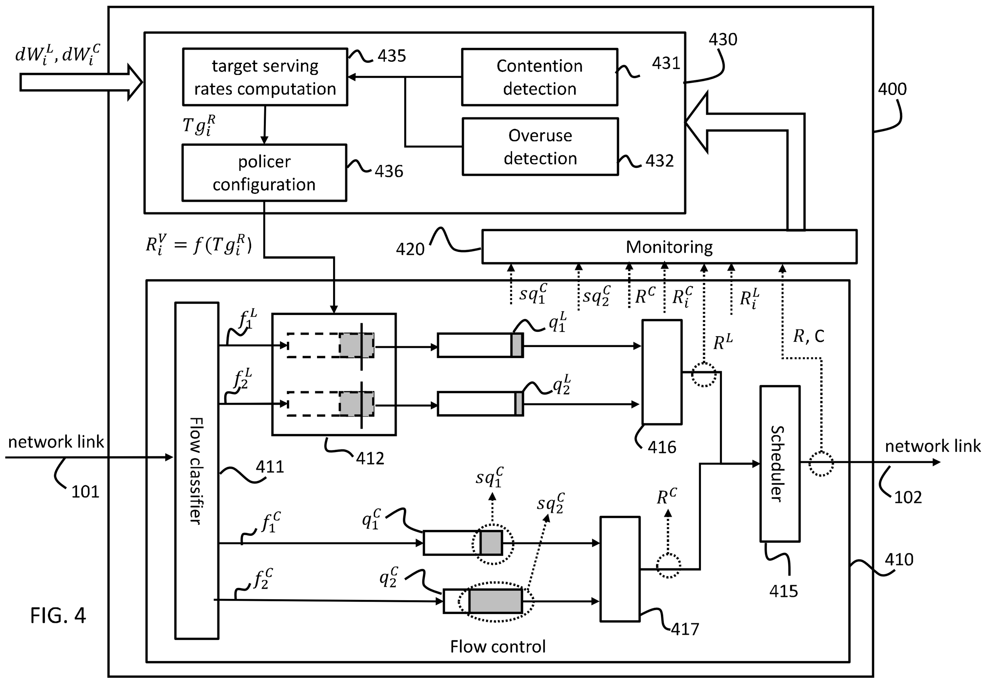

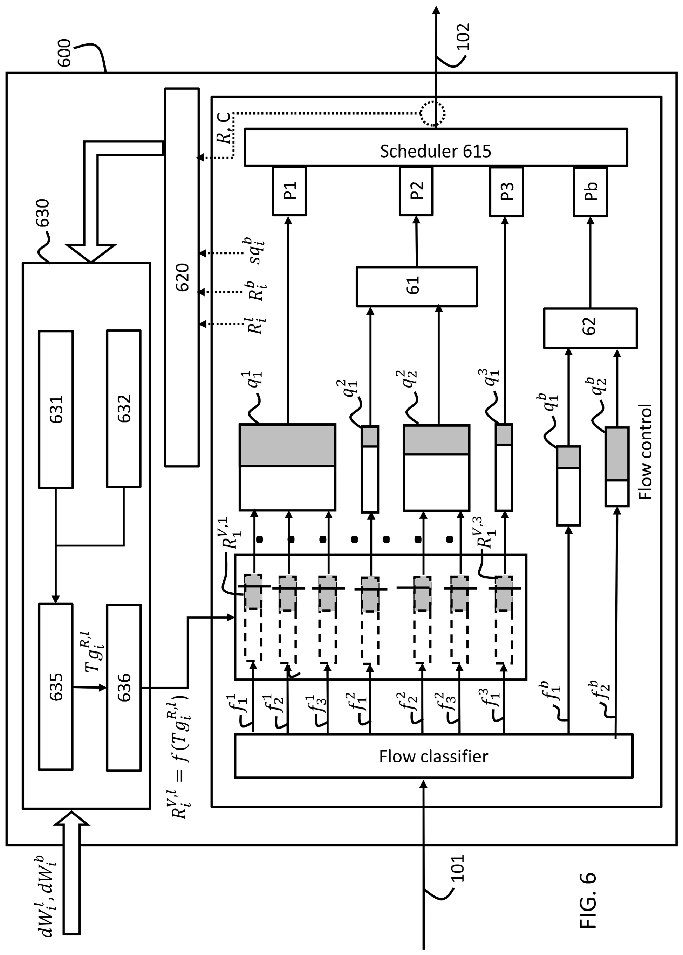

The policer 112 (e.g., a generic ECN policer) is configured to mark L4S traffic corresponding to traffic category L. The policer may be implemented via a Virtual Queue, an excess marker, random marker, etc... FIGS. 2 to 3 provide examples of policer implementation. FIGS. 4 to 5 extend the examples of FIGS. 1 to 3 to a multi-queue network node. FIG. 6 extend the examples to a network node with multi-flows per queue and multiple priority levels per category.

In all embodiments, the target serving rate $Tg^R$ and the policer parameter adapted to control the marking amount configured for the policer may be periodically (every report interval $T_{rpt}$) updated.

Back to the example of FIGS. 1A-1B, target serving rate weights $dW^L$, $dW^C$ are configured (e.g., by an operator) and correspond to the target serving rate weights for the L4S and the Classic traffic respectively.

The method of FIG. 1B includes steps 151 to 155 that may be performed iteratively, e.g., periodically.

Step 151: the monitoring block 120 determines the serving rates $R^C$, $R^L$ for L4S traffic and Classic traffic. The queue size $sq^C$ (in bytes or latency) may be determined for each flow in category C.

In addition, the following parameters may be determined (e.g., by the set 130 of computation blocks or by the monitoring block 120): the aggregate serving rates for Classic traffic $R^C$, the aggregate serving rate for L4S traffic $R^L$, the aggregate serving rate for all traffic $R = R^C + R^L$, and the Classic queue size $sq^C$ (in bytes or latency).

Normalized serving rates per weight may be computed (e.g., by the set 130 of computation blocks or by the monitoring block 120) as follows:

$$S^L = R^L/dW^L, S^C = R^C/dW^C.$$

The link (resource) capacity $C$ (also referred to herein as the link capacity) of the output network link 102 may be used as a reference upper value for the aggregate serving rate for all traffic $R$. The definition of the link capacity can be link-specific (e.g. can be physical resource blocks, bits, symbols, etc...) depending on the nature of the output network link 102.

All these parameters may be determined (e.g., by the set 130 of computation blocks or by the monitoring block 120) during the last report interval $T_{rpt}$, and optionally smoothed or averaged if necessary.

Step 152: the contention detection block 131 is configured to detect whether a contention happens for the Classic traffic in order to determine whether to limit the serving rate of the L4S traffic or not.

The contention may be detected for one or more flows (or respectively one or more queues) in the Classic traffic. If a queue is under contention then all its flows will be under contention.

Several contention detection methods may be used. The contention detection methods may be based on the link capacity $C$ of network link 102 and / or the size of the queue for Classic traffic.

According to a first contention detection method, contention is detected for the Classic traffic if the aggregate serving rate $R$ over all traffic categories overshoots an input threshold $th^{du}$, corresponding to a percentage of the link capacity $C$. With a mathematical formula, contention is detected for the Classic traffic if: $R > C * th^{du}$

According to a second contention detection method using one or more queues for Classic traffic, contention is detected for the Classic traffic if the following criteria are met: (i) if the measured (resource) rate $R^C$ is non-zero OR (ii) if the Classic queue(s) (or any of the Classic queues in a multi queue embodiment) accumulates a size $sq^C$ (in bytes or latency) exceeding an input size threshold $t^{ds}$. With a mathematical formula, contention is detected for the Classic traffic if:

$$R > C * th^{du} \text{ AND } (R^C > 0 \text{ } OR \text{ } sq^C > th^{ds}) \text{ with } 0 < th^{du} \leq 1.$$

According to a third contention detection method, contention is detected for the Classic traffic if the low priority queue (or any of the low priority queues in a multi queue embodiment, see FIGS. 4-6) accumulates a size $sq^C$ (in bytes or latency) beyond an input size detection threshold $th^{ds}$ for longer than an input time threshold $th^{dt}$, i.e. $sq^C > th^{ds}$ for at least consecutive duration of $th^{dt}$ time.

Step 153: the overuse detection block 132 is configured to detect whether an overuse happens for the L4S traffic in order to determine whether to limit L4S traffic or not based on L4S rate.

The overuse may be detected for one or more flows (or respectively one or more queues) in the L4S traffic. If there is an overuse for a queue, then there may be an overuse for at least one of its flows.

Several overuse detection methods may be used. The overuse detection methods may be based on link capacity $C$ of network link 102 (for example, a percentage of the link capacity to create headroom) and/or a desired maximum serving rate $dR^L$ configured for the L4S traffic.

According to an example overuse detection method, it is checked whether the serving rate $R^L$ of the L4S traffic exceeds a desired maximum serving rate $dR^L$ configured for the L4S traffic i.e. if $R^L > dR^L$.

The maximum serving rate may be configured based on the capacity $C$ of the network link 102. For example, $dR^L$ may be an input parameter that is configured in order to limit the serving rate of the L4S traffic below the link capacity $C$ with $dR^L < C$, e.g. to create headroom which is useful to minimize the L4S latency when only L4S traffic is active or when link capacity fluctuates. Alternatively, $dR^L$ may be dynamically calculated from a desired input percentage $dC_p^L$ of the link (resource) capacity, e.g. $dR^L = dC_p^L * C$, with $0 < dC_p^L * \leq 1$.

Step 154: the target serving rate $Tg^R$ is computed as a function of the serving rates $R^C$, $R^L$, the target serving rate weights $dW^L$, $dW^C$, the result of the contention detection and the result of the overuse detection.

The target serving rate $Tg^R$ for a flow in category L may be equal to (i) either a maximum serving rate $dR^L$ configured for L4S traffic, when no contention and no overuse are detected (ii) or otherwise a limited serving rate proportional to a target serving rate weight $dW^L$ configured for the flow.

The maximum serving rate $dR^L$ may be configured based on the capacity of the network link 102.

The limited serving rate may be computed based on the normalized serving rate $S^C$ of the Classic traffic or the two normalized serving rates $S^C$ and $S^L$. The limited serving rate is for example equal to a target normalized serving rate $S_t$ multiplied by the target serving rate weight $dW^L$ configured for the flow, wherein the target normalized serving rate is computed based one or more of the normalized serving rates $S^C$ and $S^L$. This allows to balance the serving rates of the flows to comply with the target serving rate weights if contention or overuse is detected.

The target serving rate $Tg^R$ may for example be computed as

$Tg^R$ = min ($S^C$ * $dW^L$, $dR^L$, $C$), if contention is detected for Classic traffic or overuse is detected for L4S traffic;
$Tg^R$ = min ($dR^L$, $C$), otherwise.

The serving rate to converge to "on the long run" and on average may be computed by considering the link capacity $C$ as the reference rate to which the target serving rate weights are applied, e.g., $R^L \sim C * dW^L/(dW^L + dW^C)$ It is to be noted that the target serving rate for a flow might vary depending on the dynamics of the flows (e.g. if the serving rate of a flow is too high then the target serving rate might get lower to mark more aggressively, and vice versa). The capacity $C$ of a network link might also vary and the capacity $C$ may be an average capacity. The weight proportionality expressed by the above formula might be reached only when traffic C and L are active, not rate limited at the source (i.e., arrival rate is not below the associated proportional serving rate ($C * dW^L/(dW^L + dW^C)$ or $C * dW^C/(dW^L + dW^C)$)) and the link is fully used. If there is no traffic in category C for example, the policer parameter may be configured such that the traffic in category L can use more than its proportional serving rate $C * dW^L/(dW^L + dW^C)$ but remains (on average) smaller than the maximum serving rate dRL.

Step 155: the policer is configured by a policer parameter adapted for controlling a marking amount. The policer parameter is computed as a function of the target serving rate $Tg^R$.

The marking amount may be configured (e.g., by means of a policer parameter like a virtual queue rate, a policer rate or a marking probability) such that the effective serving rate $R^L$ of traffic category L (approximately) converges to a serving rate proportional to the configured target serving rate weight when link congestion is detected and Classic traffic is active and not rate limited at the source. Further, the effective serving rate $R^L$ of traffic category L may be always kept lower than a desired maximum serving rate $dR^L$ in order to create headroom.

In the context of L4S flows control, the interval $T_{rpt}$ is preferably lower than the suggested minimum L4S/Prague reference round trip time (e.g. ~25ms in specification, see: RFC 9331, https://datatracker.ietf.org/doc/rfc9331/), with a suggested value in the order of ~ 5ms-10ms.

The configuration of the marking amount disclosed herein may be used with different priority schedulers for L4S, whether the scheduler is a strict priority scheduler or conditional priority scheduler.

For a relative priority scheduler or blocking scheduler, the scheduling weights $W^L$ and $W^C$ giving the respective weights with which the scheduler serves the L4S and Classic queues may be configured based on the target serving rate weights $dW^L$, $dW^C$, such that $W^L = M * dW^L$, $W^C = dW^C$, where M is a priority factor (e.g. based on a fixed gain weight, or on a delay-based weight). $W^L$ and $W^C$ are used to configure the serving rates the "blocking scheduler" offers for the prioritized and non-prioritized queues/flows respectively.

It is to be noted that if a blocking scheduler would be configured with the scheduling weights $W^L = dW^L$ and $W^C = dW^C$, the scheduler would control the serving rates to be equal to the target serving rates, but this would nullify the effect of the prioritization and thus the low latency benefit that the flow rate control methods disclosed herein achieve. In other words, when the scheduling rate for the prioritized traffic is configured higher than the target serving rate weight $dW^L$, for example such that $W^L = M * dW^L$, $W^C = dW^C$, this allows incoming packets to be scheduled with precedence and to minimize queueing in the absence of congestion and overuse.

With the proposed method for flow rate control, an operator may assign specific target serving rate weights to flows in category L (e.g., the prioritized flows, or L4S flows) and the method allows to achieve weighted resource fairness among flows. For traffic in category L, a low latency scheduling strategy can be configured and the marking amount allows to control the input rate of traffic in category L (since the sending rate of traffic in category L is regulated based on the ratio of marked packets to overall packets) and to match the target serving rate weights.

Additionally wireless links experience varying channel conditions and throughput, and in this context latency of the traffic in category L can benefit from some headroom to keep the aggregate rate as much as possible below the channel capacity.

FIG. 2 shows a simplified block diagram of a network node 200 according to an embodiment #1 with a dual queue node where a virtual queue-based marker is used as an ECN policer to mark L4S traffic. The marking amount is configured by configuring a rate of the virtual queue. The rate of the virtual queue may be adapted periodically.

The method in FIG. 2 applies to the same dual queue scenario illustrated in FIG. 1A. The embodiment specializes to a case in which a Virtual Queue (VQ) is used as the ECN policer to mark L4S traffic with a given rate, referred to as the virtual queue rate $R^V$. $R^V$ may be expressed in bit rate.

The same monitoring block 120 as in FIG. 1A is used to obtain the serving rates $R^C$, $R^L$. To compute and configure the policer parameter adapted to control the amount of packets to be marked, a set 230 of computation blocks may be used for flow rate control. Also, the same overuse detection block 132 and the contention detection block 131 of FIG. 1A are used.

The target serving rate $Tg^R$ is computed by a target serving rate computation block 135, e.g. as described for FIG. 1A, as a function of the serving rates $R^C$, $R^L$, the target serving rate weights $dW^L$, $dW^C$, the result of the contention detection and the result of the overuse detection.

The policer rate $R^V$ applied by the virtual queue (also referred to herein as the virtual queue rate) is updated based on the target serving rate $Tg^R$ and configured by a policer configuration block 236. For each virtual queue, a (e.g., static) virtual queue marking threshold (e.g., size or latency) $th^v$ is configured, but this virtual queue marking threshold does not depend on the target serving rate $Tg^R$. The virtual queue marking threshold defines a queue filing threshold beyond which the virtual queue starts marking packets.

For example, $R^V = Tg^R$ if the $R^V$ and $Tg^R$ are expressed in the same resource rate, e.g. as a bit rate. Otherwise, if the $R^V$ and $Tg^R$ are not expressed in the same resource rate, a conversion function $f$ to convert the target resource rate to a virtual queue rate $R^V = f(Tg^R)$ (typically bitrate) is used.

The conversion function $f$ may be link specific. For example, for a network link 102 through a cellular network, if $Tg^R$ is a PRB rate, then $f$ multiplies $Tg^R$ by the average number of bits per PRB on the link associated with the L4S queue to get the virtual queue rate $R^V$ expressed as a bit rate.

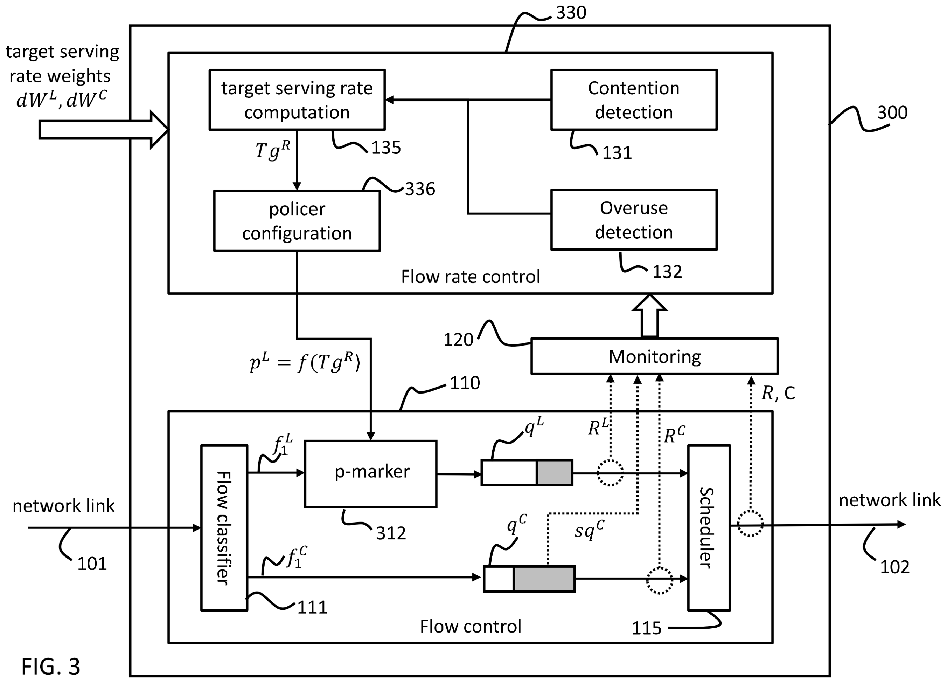

FIG. 3 shows a simplified block diagram of a network node 300 according to an embodiment #2 with a dual queue node where a probability-based marker is used as an ECN policer to mark L4S traffic. The marking amount is configured by configuring a marking probability. The marking probability may be updated periodically through an excess marking schema.

FIG. 3 applies to the same dual queue architecture shown in FIG. 2 where, however, a probability-based marker 312 (a marker that marks packets deterministically or randomly according to a given probability $p^L$) is used as the ECN policer to mark L4S packets and control L4S traffic rate. The probability-based marker is also referred to as the p-marker.

The same monitoring block 120 as in FIG. 1A is used to obtain the serving rates $R^C$, $R^L$. To compute and configure the policer parameter adapted to control the amount of packets to be marked, a set 330 of computation blocks may be used for flow rate control. Also, the same overuse detection block 132 and the contention detection block 131 of FIG. 1A are used.

The target serving rate $Tg^R$ is computed by a target serving rate computation block 135, e.g. as described for FIG. 1A, as a function of the serving rates $R^C$, $R^L$, the target serving rate weights $dW^L$, $dW^C$, the result of the contention detection and the result of the overuse detection.

The marking probability $p^L$ is updated based on the target serving rate $Tg^R$ by a policer configuration block 336. The marking probability is used to configure the p-marker.

The marking probability may be determined by comparing the L4S queue target rate $Tg^R$ with the L4S serving rate $R^L$.

For example, an excess marker can be implemented by setting $p^L$ as one of:

$p^L = (R^L - Tg^R)/Tg^R$ if $R^L > Tg^R$ (if excess is detected)
$p^L = 0$ otherwise

In the embodiments #1 (FIG. 2) and #2 (FIG. 3), the scheduler may apply a scheduling solution based on relative priority. Let define $W^L$ and $W^C$ as the scheduling weights of the L4S and Classic queue respectively. Then one can set $W^L = M * dW^L$, and $W^C = dW^C$ with $M$ a priority relative factor (e.g. based on a fixed gain, or on a delay-based weight).

FIG. 4 shows a simplified block diagram of a network node 400 according to an embodiment #3 which generalizes the embodiment #1 of FIG. 2 to a network node where we can have multiple flows each with a dedicated queue and a Virtual queue-based marker per flow is used as an ECN policer.

For the embodiments of FIGS. 4-5 with multiple flows, each parameter (e.g., $dW_i^L$ and $dW_i^C$) has a similar means to that used for FIGS. 1-3 (e.g., $dW^L$ and $dW^C$), the subscript i being added to the parameters for identifying the considered flow or its associated queue.

FIG. 6 is a further extension, where the network node can have flows with dedicated queues, multiple flows per single queue, multiple queues, and multiple priority levels in the same category L or C, the subscript i being added to the parameters for identifying the considered flow or queue.

The method of FIG. 4 extends the method of FIG. 2 in a case to multiple flows per multiple L4S queues $q_i^L$ (two flows are illustrated but more can exist) and multiple flows per Classic queue $q_i^C$ exist (two flows are illustrated but more can exist). Wherein, each flow is associated a dedicated queue. The subscript $i$ is used to refer to the $i^{th}$ queue and to the $i^{th}$ flow.

In the example of FIG. 4, each L4S flow $f_i^L$ is processed by a Virtual Queue (VQ) of the ECN policer, where $R_i^V$ is the virtual queue rate of the $i^{th}$ virtual queue. $th^v$ is the virtual queue marking threshold (e.g. size or latency) of the $i^{th}$ virtual queue. Optionally, each queue $q_i^L$ can be equipped with an AQM.

In the example of FIG. 4, each L4S flow $f_i^L$ is treated (e.g., after the virtual queue) with a dedicated prioritized queue $q_i^L$. Likewise, each Classic flow $f_i^C$ is treated with a dedicated non-prioritized queue $q_i^C$.

In such a case, each of the L4S flows $f_i^L$ is associated with a target serving rate weight $dW_i^L$ and a target serving rate $Tg_i^R$ is computed per flow in category L. Likewise, each of the Classic flows $f_i^C$ is associated with a target serving rate weight $dW_i^C$.

A scheduler 416 is used to distribute scheduling opportunities among the L4S queues $q_i^L$, while a scheduler 417 is used for the Classic queues $q_i^C$. The schedulers 416 and 417 may be conventional WRR (weighted Round Robin) schedulers. A scheduler 415 (applying strict or relative prioritization) prioritizes L4S traffic by prioritizing scheduler 416.

The marking amount is configured by configuring a rate for each of the virtual queue. The rate of the virtual queues may be updated periodically based on the respective target serving rates (e.g., every $T_{rpt}$) computed for the corresponding flow.

To compute and configure the policer parameter adapted to control the amount of packets to be marked, a set 430 of computation blocks may be used for flow rate control. In the example of FIG. 4, the set 430 of computation blocks includes: a contention detection block 431, an overuse detection block 432, a target serving rates computation block 435 and a policer configuration block 436. Any other architecture of computation blocks may be used.

The contention detection block 431 is configured to detect whether a contention happens for the Classic traffic in order to determine whether to limit the serving rate of the L4S traffic or not. The contention may be detected for one or more flows (or queues) in the Classic traffic.

Several contention detection methods may be used. The contention detection methods may be based on the link capacity $C$ of network link 102 and / or the size of the queue for Classic traffic. The contention detection method may be one of the methods described for FIGS. 1A-1B.

The overuse detection block 432 is configured to detect whether an overuse happens for the L4S traffic in order to determine whether to limit L4S traffic or not based on L4S rate. The overuse may be detected for one or more flows (or queues) in the L4S traffic.

Several overuse detection methods may be used. The overuse detection methods may be based on link capacity C of network link 102 and/or a desired maximum serving rate $dR^L$ configured for the L4S traffic. The overuse detection method may be one of the methods described for FIGS. 1A-1B.

A monitoring block 420 is used to obtain the current serving rates $R_i^C$, $R_i^L$ for each flow, as described for FIGS. 1 to 3. The monitoring block 420 may obtain the size of each Classic queue $sq^C$ (in bytes or latency), measured during the last report interval $T_{rpt}$, and optionally smoothed if necessary.

The monitoring block 420 (or any block in the set 430 of computation blocks) may be configured to determine an aggregate serving rate $R^C$ for Classic traffic, an aggregate serving rate $R^L$ for L4S traffic, an aggregate serving rate for all traffic $R = R^C + R^L$.

The monitoring block 420 (or any block in the set 430 of computation blocks) may be configured to calculate serving-rates-per-weight (i.e., normalized serving rates) per each individual flow as: $S_i^C = R_i^C / dW_i^C$ and $S_i^L = R_i^L / dW_i^L$.

For each L4S flow $f_i^L$, a target serving rate $Tg_i^R$ is computed per L4S flow by the target serving rate computation block 435, as a function of the serving rates $R_i^C, R_i^L$, the target serving rate weights $dW_i^L$ and $dW_i^C$, the result of the contention detection and the result of the overuse detection.

The target serving rates computation block 435 may be configured to determine a first normalized serving rate $S_t^C$ to use if contention is detected. The first normalized serving rate $S_t^C$ may be determined from the normalized serving rates of the Classic queues. The first normalized serving rate $S_t^C$ may be computed as the serving rate per weight of the most congested Classic queue which is typically the flow with the highest value, i.e. $S_t^C = \max(S_i^C)$. Alternative selection criteria could be used that consider e.g. also queue size status.

The target serving rates computation block 435 may be configured to determine a second normalized serving rate $S_t^L$ to use if overuse is detected. The second normalized serving rate $S_t^L$ may be determined from the normalized serving rates of the L4S queues. The second normalized serving rate $S_t^L$ may be computed as the highest normalized serving-rate-per-weight downscaled by the overuse, i.e. $S_t^L = dR^L / R^L * \max(S_i^L)$.

The target serving rates computation block 435 may be configured to compute the target serving rate $Tg_i^R$ per L4S flow based on the first and second normalized serving rates. The target serving rate $Tg_i^R$ for a flow is proportional to the target serving rate weight $W_i^L$ configured for the flow.

The target serving rate $Tg_i^R$ may be computed as:

$$Tg_i^R = \min(S_t^C, S_t^L) * dW_i^L,$$

if contention is detected

$$Tg_i^R = S_t^L * dW_i^L,$$

if overuse is detected

$$Tg_i^R = dR^L,$$

otherwise.

To ensure that the target serving rate $Tg_i^R$ does not overshoot the link capacity the target serving rate $Tg_i^R$ may be limited as

$$Tg_i^R = \min(Tg_i^R, C)$$

The virtual queue rate $R_i^V$ applied by the *i*th virtual queue processing the *i*th flow is updated based on the target serving rate $Tg_i^R$ computed for this flow and configured by a policer configuration block 436. A virtual queue marking threshold (e.g., size or latency) *th*v may be computed to configure the virtual queues. Each virtual queue rate is updated as a function of the Target Rate $R_i^V = f(Tg_i^R)$.

For example, $R_i^V = Tg_i^R$ if the $R_i^V$ and $Tg_i^R$ are expressed in the same resource rate (e.g., bit rate). Otherwise, *f* is a link specific conversion from the target resource rate to the VQ resource rate (typically bitrate).

The conversion function *f* may be link specific. For example, for a network link 102 through a cellular network, if $Tg_i^R$ is a PRB rate, then *f* multiplies $Tg_i^R$ by the average number of bits per PRB on the link associated with the L4S flow (or queue) to get the virtual queue rate $R_i^V$ expressed as a bit rate.

In embodiments, the policer parameter is configured (e.g., by means of a virtual queue rate, a policer rate or a marking probability) such that the serving (resource) rate $R_i^L$ of each flow for traffic category L approximately converges on average to

$$R_i^L \sim C * dW_i^L / \left( \sum dW_i^L + \sum dW_i^C \right)$$ if link congestion happens. As explained above, the weight proportionality expressed by this formula might be reached only when traffic C and L are active, not rate limited at the source (i.e., arrival rate of the flow is not below the associated proportional serving rate $C * dW_i^L / \left( \sum dW_i^L + \sum dW_i^C \right)$ or $C * dW_i^C / \left( \sum dW_i^L + \sum dW_i^C \right)$ ) and the link is fully used. The policer parameter may be configured such that the aggregate serving rate for traffic category L is (on average) smaller than a desired serving rate $dR^L$ to create headroom.

The embodiment of FIG. 4 is applicable when relative prioritization or strict prioritization is used by the scheduler 415 to prioritize L4S traffic. With relative prioritization, scheduling weights $W^L$ and $W^C$ are configured to control the serving rates for L4S traffic (aggregate of all the L4S flows) and Classic traffic (aggregate of all the Classic flows), where the schedulers 416 and 417 distributes the aggregate scheduling opportunities to individual L4S and Classic flows. The respective scheduling weights may be computed based on the target serving rate weights $dW_i^L$ and $dW_i^C$ configured for the individual flows. The scheduling weight for Classic traffic may be set as the sum of the target serving rate weights (i.e. $W^C = \sum dW_i^C$ ) per flow in category C while the scheduling weight for L4S traffic is set as the sum of the target serving rate weights per flow in category L, where the sum is scaled with a priority relative factor $M$ (i.e. $W^L = M * \sum dW_i^L$ ). As explained for FIG. 2, $M$ can be based on a fixed gain, or on a delay-based weight, etc.

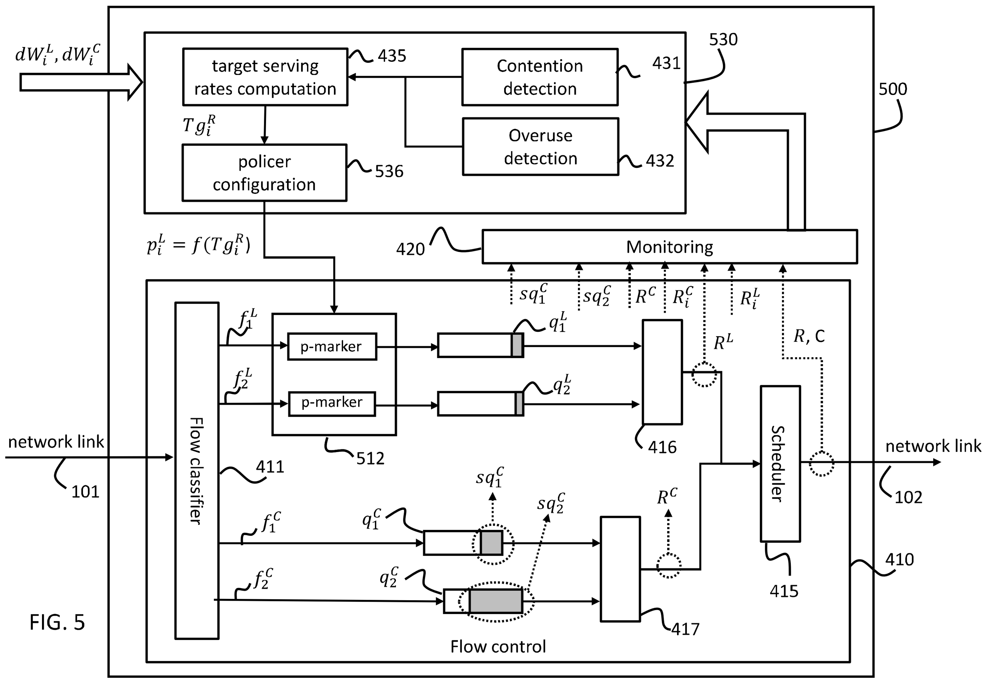

FIG. 5 shows a simplified block diagram of a network node 500 according to an embodiment #4 which generalizes the embodiment #2 of FIG. 3 to a network node where we can have multiple flows each with a dedicate queue and a probability-based marker per L4S flow is used as an ECN policer. The marking probability of each probability-based marker may be adapted periodically through an excess marking schema.

The subscript i identifies a flow or queue in the computation details.

In the embodiment of FIG. 5, each L4S flow $f_i^L$ may be treated with a dedicated prioritized queue $q^L$. Likewise, each Classic flow $f_i^C$ is treated with a dedicated non-prioritized queue $q^C$. In such a case, each of the L4S flows $f_i^L$ is associated with a target serving rate weight $dW_i^L$ and a target serving rate $Tg_i^R$ is computed per flow Likewise, each of the Classic flows $f_i^C$ is associated with a target serving rate weight $dW_i^C$ .

The network node 500 is similar to the network node 400 of FIG. 4 except that each of L4S flows $f_i^L$ is coupled with a probability-based marker (a marker that marks packets deterministically or randomly according to a given probability $p_i^L$ ). Each probability-based marker is used to mark L4S packets of a flow and control L4S traffic rate of this flow.

To compute and configure the policer parameter adapted to control the amount of packets to be marked, a set 530 of computation blocks may be used for flow rate control. The policer parameter used for controlling the amount of packets to be marked is a probability $p_i^L$ configured per flow / probability-based marker by a policer configuration block 536.

The other functional blocks are the same as in FIG. 4 and will not be described again for the sake of brevity.

The principles for computing a marking probability described for FIG. 3 can be generalized to the multiple flows embodiment of FIG. 5.

Accordingly, the marking probability for each flow may be computed by comparing the target serving rate $Tg_i^R$ with the measured flow (resource) rate $R_i^L$ . For example, an excess marker can be implemented by setting $p_i^L$ as one of:

$$p_i^L = \left( R_i^L - Tg_i^R \right) / Tg_i^R \text{ if } R_i^L > Tg_i^R$$

(if excess is detected) $p_i^L = 0$ otherwise

Like for the embodiment of FIG. 4, the embodiment of FIG. 5 is applicable when relative prioritization or strict prioritization is used by the scheduler 415 to prioritize L4S traffic.

FIG. 6 shows a simplified block diagram of a network node 600 according to an embodiment #4 which generalizes FIG. 4 to generic prioritized and non-prioritized types of traffic, where the serving rate of the prioritized flows is controlled based on a marking amount. The embodiment in FIG. 6 supports multiple flows, multiple queues, multiple priority levels (for example, P1, P2, P3 and Pb).

The embodiment in FIG. 6 is a flow-based embodiment that extends the embodiment of FIG. 4 to account for more flexibility in the distinction between higher and lowest priority traffic and/or in designing different priority level, for example to offer a different latency experience (i.e. highest priority lowest latency), where the serving rates of the prioritized flows belonging to the higher priority traffic (traffic category L) is controlled to avoid the starvation of the non-prioritized flows belonging to the lower (and lowest) priority traffic (traffic category C) and by enforcing the target serving rate weights on traffic flows while still prioritizing the flows with higher priorities and using congestion marking for these flows with higher priorities.

The traffic category L may correspond to several levels of priority and the traffic category C may correspond also to several levels of priority. In the example of FIG. 6, multiple priority levels are used for category L and one (lowest) priority level for category C. Each level has index $l$ and the lowest has index b, which is the one dedicated to category C. Further, the lower the priority index $l$ the higher the priority enforced by the scheduler, where the scheduler may enforce priority based on strict prioritization or relative prioritization or a combination of both.

The embodiment of FIG. 6 can be extended for the case in which multiple priority levels are applied by the scheduler for traffic category C and / or in which multiple queues $q_i^b$ are used for traffic category C. Generally, there may be multiple flows per priority level.

All priority levels P1, P2, P3 (except the lowest priority level *Pb*) applied by the scheduler 615 are reserved for traffic category L for which queue-less transmission (e.g. for L4S traffic or selected low-latency Classic traffic) is desired. It is to be noted that there may be several priority levels also for traffic in category C.

As an example represented by FIG. 6, the network node 600 receives input flows, including first flows $f_i^l$ (prioritized flows) with *ith* flow of priority level $l$ (when $l$ =i the priority level is Pi) and second flows $f_i^b$ (non-prioritized flows), with *ith* flow of priority level Pb. Each flow is assigned a target serving rate weight $dW_i^l$ or $dW_i^b$, respectively.

The policer 612 includes a virtual queue-based marker per prioritized flow $f_i^l$ is used (but p-maker may be used instead). The target serving rate $Tg_i^{R,l}$ and the corresponding policer rate $R_i^{V,l}$ of each virtual queue is updated periodically per prioritized flow $f_i^l$.

The packets of the flows may be stored in queues $q_i^l$ and $q_i^b$. Optionally, each queue can be equipped with an AQM. There may be multiple queues, where each queue is identified as $q_i^l$ for the *ith* queue of priority level $l$ (P1, P2 or P3) or as $q_i^b$ for the *ith* queue with priority level Pb. A queue may store packets of one or more flows. In the example of FIG. 6, the 3 flows $f_1^1, f_2^1, f_3^1$ with priority P1 are treated in a single queue $q_1^1$ and a single flow $f_1^3$ with priority P3 is treated in queue $q_1^3$.

Some of priority levels applied by the scheduler may be assigned to a single queue. In the example, P1 and P3 are assigned to only one queue each, $q_1^1$ an $q_1^3$ respectively. Some priority levels may be assigned to different queues. In the example, P2 is assigned to two queues $q_1^2$ and $q_2^2$.

A scheduler 61 (e.g., Weighted Round Robin scheduler) may be used to distribute scheduling opportunities among some of the flows (In the example, only the two queues $q_1^2$ and $q_2^2$ with priority P2) in traffic category L.

The target serving rates $Tg_i^{R,l}$ of the flows may be set proportionally to the target serving rate weights $dW_i^l$ configured for the flows.

A scheduler 62 (e.g., Weighted Round Robin scheduler) may be used to distribute scheduling opportunities among the queues for traffic category C (e.g., queue building Classic traffic). A priority scheduler 615 (with strict or relative prioritization) prioritizes traffic category L (e.g., L4S and or low-latency Classic traffic).

To compute and configure the policer parameter used for controlling the amount of packets to be marked, a set 630 of computation blocks may be used for flow rate control. In the example of FIG. 6, the set 630 of computation blocks includes: a contention detection block 631, an overuse detection block 632, a target serving rates computation block 635 and a policer configuration block 636. Any other architecture of computation blocks may be used.

Each of the flows $f_i^l$ in traffic category L is coupled with a Virtual Queue (VQ) as the ECN policer, where $R_i^{V,l}$ is the rate of this VQ and $th^{V,l}$ is the given VQ marking threshold (e.g. size or latency).

The virtual queue rates are updated iteratively (e.g., periodically), considering the per flow target serving rate weights $dW_i^l$ and $dW_i^l$. The target serving rate weights $dW^l$ per priority level are then simply derived as the sum of the per flow weights, i.e. $dW^l = \sum dW_i^l$.

The monitored parameters determined by the monitoring block 620 may include:

- The serving rates of each flow $R_i^l$ and $R_i^b$

- The serving rates aggregated per priority level $R^l = \sum R_i^l$ and $R^b = \sum R_i^b$
- The serving rates aggregated over traffic category L: $R^L = \Sigma R^l$, $\forall l < b$
- The size $sq_i^b$ of each queue $q_i^b$ used for traffic category C (in bytes or latency).

The monitored parameters may be determined during the last report interval $T_{rpt}$, and optionally smoothed if necessary.

Contention detection may be performed as described for FIGS. 1A-1B or

FIG. 4. Contention may be detected if one or more flows (or respectively queues) used for traffic category C meets the contention detection conditions.

Overuse detection may be performed as described for FIGS. 1A-1B or FIG. 4. The overuse may be detected for one or more flows (or respectively queues) used for traffic category L.

The normalized serving rates (or serving rates per-weight) may be computed per each individual flow as

$$S_i^l = R_i^l / dW_i^l \text{ and } S_i^b = R_i^b / dW_i^b.$$

A first normalized serving rate $S_t^C$ is determined for the queue(s) used for traffic category C. The first normalized serving rate $S_t^C$ is used if contention is detected for traffic category C. The first normalized serving rate $S_t^C$ may be computed as the normalized serving rate of the most congested used for traffic category C, which is typically the queue that reports the highest normalized serving rate, i.e. $S_t^C = \max(S_i^b)$, with b the lowest priority level. Alternative selection criteria could be used that consider for example queue size as disclosed herein for FIG. 1B for example.

A second normalized serving rate $S_t^L$ is determined for the queues used for traffic category L. The second normalized serving rate $S_t^L$ is to be used if overuse is detected. The second normalized serving rate $S_t^L$ may be computed as the highest serving-rate-per-weight among all high priority level l except the lowest (i.e. l < b) downscaled by the overuse, i.e. $S_t^L = dR^L / R^L * \max_{l<b} \max(S_i^L)$.

The target serving rate is computed for each flow in category L as one of: $Tg_i^{R,l} = \min(S_t^C, S_t^L) * dW_i^l$, if contention is detected for one or more flows in category C $Tg_i^{R,l} = S_t^L * dW_i^L$, if overuse is detected for one or more flows in category L $Tg_i^{R,l} = dR^L$, otherwise.

To ensure that the target serving rate $Tg_i^{R,l}$ does not overshoot the link capacity the target serving rate $Tg_i^{R,l}$ may be limited as

$$Tg_i^{R,l} = \min(Tg_i^{R,l}, C)$$

The marking amount is updated as a function of target serving rate is computed the flow.

When virtual queues are used, each virtual queue rate may be updated as a function of the target serving rate:

$R_i^{V,l} = f(Tg_i^{R,l})$ as disclosed for example for FIG. 4.

For example, $R_i^{V,l} = Tg_i^{R,l}$ if the $R_i^{V,l}$ and $Tg_i^{R,l}$ are expressed in the same resource rate (e.g., bit rate).

Otherwise, *f* is a link specific conversion from the target resource rate to the VQ resource rate (typically bitrate).

The policer parameter is configured (e.g., by means of a virtual queue rate, a policer rate or a marking probability) such that the serving rate $R_i^l$ of i$^{th}$ flow with priority *l* approximately converges to $R_i^l \sim C * dW_i^l / (\sum\sum dW_i^l + \sum\sum dW_i^b)$. As explained above, the weight proportionality expressed by this formula might be reached only when traffic C and L are active, not rate source limited (i.e., arrival rate is not below the associated proportional serving rate $C * dW_i^l / (\sum\sum dW_i^l + \sum\sum dW_i^b)$ or $C * dW_i^b / (\sum\sum dW_i^l + \sum\sum dW_i^b)$) and the link is fully used. The policer parameter may be configured such that the aggregate serving rate for traffic category L is (on average) smaller than a desired serving rate $dR^L$ to create headroom.

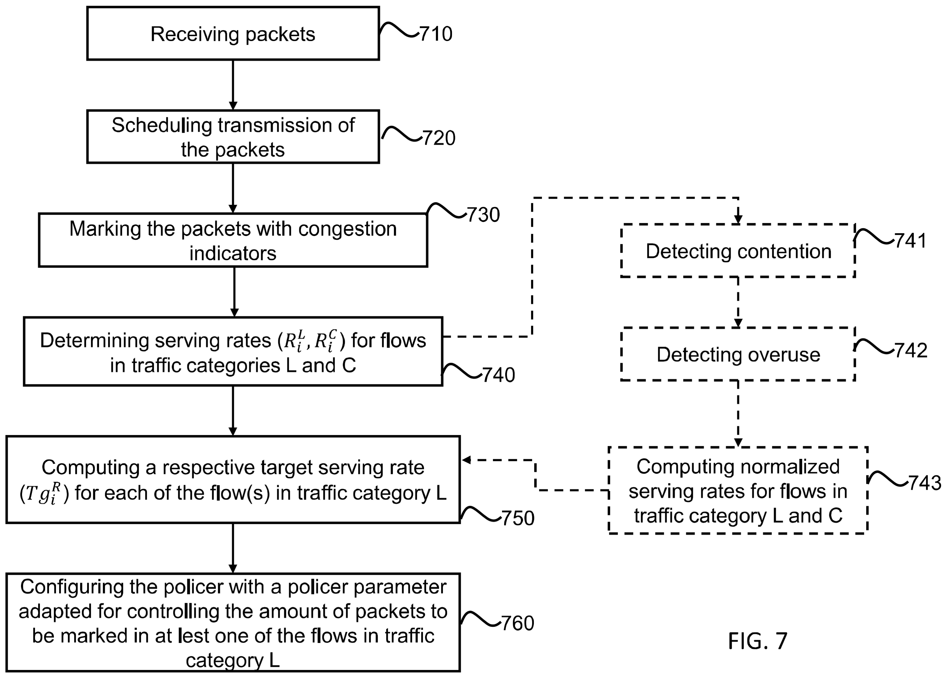

FIG. 7 shows a flowchart of a method for flow rate control according to one or more example embodiments. The steps of the method may be implemented by a network node according to any example described herein, for example by reference to FIGS. 1 to 6.

While the steps are described in a sequential manner, the person skilled in the art will appreciate that some steps may be omitted, combined, performed in different order and / or in parallel.

Step 710: packets are received by the network node. The packets may be stored in at least one queue. The packets include first packets and second packets, where the first packets belong to at least one first flow (i.e., flow(s) in traffic category L), wherein the second packets belong to at least one second flow (i.e., flow(s) in traffic category C).

Step 720: a scheduler of the network node schedules transmission of the stored packets via at least one network link. The scheduler may extract the stored packets from the in at least one queue based on the scheduled transmission. In embodiments based on priority levels, the scheduler may schedule transmission of the stored packets with prioritization for the flow(s) in traffic category L with respect to the flow(s) in traffic category C.

Step 730: a policer may mark some of the first packets belonging to flow(s) in traffic category L with a congestion indicator before transmission.

Step 740 serving rates ( $R_i^L, R_i^C$ ) are determined for flows in traffic category L and C. A serving rate for a flow indicating a rate with which packets of the considered flow are extracted by the scheduler.

Step 741: a contention may be detected for one or more flow in traffic category C. Any contention detection method disclosed herein may be used.

A contention may be detected for a given flow when a queue accumulates, for the given flow, a number ($sq^C$) of packets greater than a threshold ($th^{ds}$).

A contention may be detected when the sum (*R*) of the serving rates determined over the flows in traffic category L and C is above an upper transmission capacity (*C* * $th^{du}$) configured for the network link.

The capacity of the network link may be determined dynamically and the upper transmission capacity (*C* * $th^{du}$) may be determined by applying a threshold to the dynamically determined capacity.

Step 742: an overuse may be detected for one or more flow in traffic category L. Any overuse detection method disclosed herein may be used.

The overuse may be detected by comparing a total serving rate (*R$^L$*) determined for the flow(s) in traffic category L with a maximum serving rate (*dR$^L$*).

Step 743: respective normalized serving rates may be computed for flows in traffic category L and C. A normalized serving rate ( $S_i^L, S_i^C$ ) computed for a given flow is equal to the serving rate ( $R_i^L, R_i^C$ ) of the given flow divided by the target serving rate weight ( $dW_i^L, dW_i^C$ ) configured for the given flow.

Step 750, a respective target serving rate ( $Tg_i^R$ ) is computed for each of the flow(s) in traffic category L. The target serving rate for a flow is computed based on the serving rates. Any target serving rate computation method disclosed herein may be used.

The target serving rate ( $Tg_i^R$ ) for a flow may be (i) either equal to a maximum serving rate (*dR$^L$*) configured for the flows in the traffic category L, when no contention and no overuse are detected (ii) or otherwise equal to a limited serving rate proportional to a target serving rate weight ( $dW_i^L$ ) configured for the flow among the at least one first flow.

The limited serving rate for a flow may be equal to a target normalized serving rate (*S$_t$*) multiplied by the target serving rate weight ( $dW_i^L$ ) configured for the flow. The target normalized serving rate may be computed based one or more of the normalized serving rates ( $S_i^L, S_i^C$ ) computed in step 743.

Step 760: the policer is configured with a policer parameter adapted for controlling an amount of packets to be marked in each of the flows in traffic category L. The policer parameter used for controlling the amount of packets to be marked in a flow may be based on the target serving rate ($Tg_i^R$) determined for the considered flow. The policer parameter is adapted to cause a proper amount of packet to be marked in a flow so as to cause the serving rate of the considered flow to converge to the target serving rate of the flow.

When the policer includes at least one virtual queue for processing packets in traffic category L, the policer parameter used for controlling the amount of marked packets may be a policer rate or virtual queue rate for each of the at least one virtual queue.

When the policer includes a probability marker, the policer parameter used for controlling the amount of marked packets may be a marking probability for the probability marker.

A first target normalized serving rate ($S_t^L$) may be computed from the normalized serving rate(s) of the flow(s) in traffic category L. The first target normalized serving rate ($S_t^L$) may be computed as the maximum of the normalized serving rates ($S_i^L$) of the flow(s) in traffic category L, multiplied by the maximum serving rate ($dR^L$) and divided by a total serving rate ($R^L$) determined for the flow(s) in traffic category L.

A second target normalized serving rate ($S_t^C$) may be computed from the normalized serving rate(s of the flow(s) in traffic category C. The second normalized serving rate ($S_t^C$) may be computed as the maximum of the normalized serving rates ($S_i^C$) the flow(s) in traffic category C.

The target normalized serving rate ($S_t$) may be computed as (i) either the minimum ($\min(S_t^C, S_t^L)$) of the first and second target normalized serving rates when contention is detected and overuse is not detected (ii) or the first target normalized serving rate ($S_t^L$) when no contention is detected and overuse is detected.

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although steps of a method or process may be described in a sequential manner, some of the steps may be performed in parallel, concurrently or simultaneously. Also some steps may be omitted, combined or performed in different order.

One or more or all operation(s) of a method, process, function, engine, block, step described herein may be implemented in hardware, software, firmware, middleware, microcode, or any suitable combination thereof.

When implemented in software, firmware, middleware or microcode, instructions to perform the considered operation(s) may be stored in a computer readable medium that may be or not included in a computing device (or respectively a computing system) configured to execute the instructions. The instructions may be transmitted over the computer-readable medium and be loaded onto the computing device (or respectively computing system). The instructions are configured to cause the computing device (or respectively computing system) to perform the considered operation(s). For example, as mentioned above, at least one memory may include or store instructions, the at least one memory and the instructions may be configured to, with at least one processor, cause the computing device (or respectively computing system) to perform the considered operation(s).

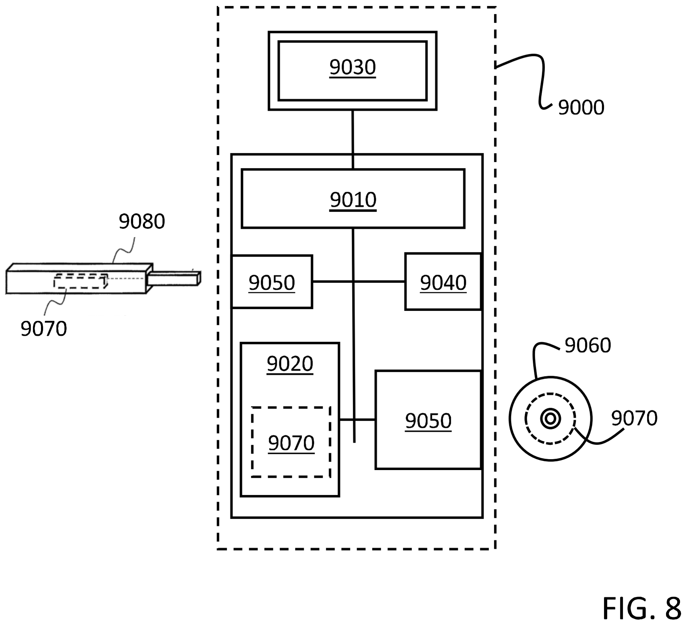

FIG. 8 illustrates an example embodiment of an apparatus 9000, as an example of network node. The apparatus 9000 may be configured to perform one or more or all of the functions of a network node disclosed herein. The apparatus 9000 may be configured to perform one or more or all steps of any method disclosed herein.

As represented schematically, the apparatus 9000 may include at least one processor 9010 and at least one memory 9020. The apparatus 9000 may include one or more communication interfaces 9040 (e.g., network interfaces for access to a wired / wireless network, including Ethernet interface, WIFI interface, etc) connected to the processor and configured to communicate via wired / non wired communication link(s). The apparatus 9000 may include user interface devices 9030 (e.g., keyboard, mouse, display screen, etc) connected with the processor. The apparatus 9000 may further include one or more media drives 9050 for reading a computer-readable storage medium (e.g., digital storage disc 9060 (CD-ROM, DVD, Blue Ray, etc), USB key 9080, etc). The processor 9010 is connected to each of the other components 9020, 9030, 9040, 9050 in order to control operation thereof.

The memory 9020 may be or include a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory 9020 may be configured to store, amongst other things, an operating system of the apparatus 9000 and / or one or more computer program code of one or more software applications. The RAM of the memory 9020 may be used by the processor 9010 for the temporary storage of data.

The processor 9010 may be configured to store, read, load, execute and/or otherwise process instructions 9070 stored in a computer-readable storage medium 9060, 9080 and / or in the memory 9020 such that, when the instructions are executed by the processor, causes the apparatus 9000 to perform one or more or all steps of a method described herein for the concerned apparatus 9000.

The instructions may correspond to program instructions or computer program code. The instructions may include one or more code segments. A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

When provided by a processor, the functions may be provided by a single dedicated processor, by a single shared processor, or by a plurality of individual processors, some of which may be shared. The term "processor" should not be construed to refer exclusively to hardware capable of executing software and may implicitly include one or more processing circuits, whether programmable or not. A processor or likewise a processing circuit may correspond to a digital signal processor (DSP), a network processor, an application specific integrated circuit (ASIC), a field programmable gate array (FPGA), a System-on-Chips (SoC), a Central Processing Unit (CPU), a Graphical Processing Unit (GPU), an arithmetic logic unit (ALU), a programmable logic unit (PLU), a processing core, a programmable logic, a microprocessor, a controller, a microcontroller, a microcomputer, a quantum processor, any device capable of responding to and/or executing instructions in a defined manner and/or according to a logic.

A computer readable medium or computer readable storage medium may be any tangible storage medium suitable for storing instructions readable by a computer or a processor. A computer readable medium may be more generally any storage medium capable of storing and/or containing and/or carrying instructions and/or data. The computer readable medium may be a non-transitory computer readable medium. The term "non-transitory", as used herein, is a limitation of the medium itself (i.e., tangible, not a signal) as opposed to a limitation on data storage persistency (e.g., RAM vs. ROM).

A computer-readable medium may be a portable or fixed storage medium. A computer readable medium may include one or more storage device like a permanent mass storage device, magnetic storage medium, optical storage medium, digital storage disc (CD-ROM, DVD, Blue Ray, etc), USB key or dongle or peripheral, a memory suitable for storing instructions readable by a computer or a processor.

A memory suitable for storing instructions readable by a computer or a processor may be for example: read only memory (ROM), a permanent mass storage device such as a disk drive, a hard disk drive (HDD), a solid state drive (SSD), a memory card, a core memory, a flash memory, or any combination thereof.

In the present description, the wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc.

The means may include at least one processor and at least one memory including at least one memory storing instructions that, when executed by the at least one processor, cause an apparatus to perform the considered function(s). The means may include circuitry (e.g., processing circuitry) configured to perform the considered function(s).

The term "circuitry" may refer to one or more or all of the following:

(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together; and
(c) hardware circuit(s) and or processor(s), such as a microprocessor(s) or a portion of a microprocessor(s), that requires software (e.g., firmware) for operation, but the software may not be present when it is not needed for operation."

As a further example, the term circuitry also covers an implementation of merely a hardware circuit or processor (or multiple processors) or portion of a hardware circuit or processor and its (or their) accompanying software and/or firmware.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, when the term "and/or" is used in a list of items, it implies that the list may include any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

Although aspects have been described with reference to particular embodiments, it is to be understood that these embodiments are merely illustrative of the principles and applications of the present disclosure. It is therefore to be understood that numerous modifications can be made to the illustrative embodiments and that other arrangements can be devised without departing from the spirit and scope of the disclosure as determined based upon the claims and any equivalents thereof.

MATHEMATICAL NOTATIONS

$R^C$      (aggregate) serving rate for the non-prioritized flow(s)

$R^L$      (aggregate) serving rate for the prioritized flow(s)

$R_i^C$      serving rate for ith non-prioritized flow

$R_i^L$      serving rate for ith prioritized flow

$S^C$      normalized serving rate for the non-prioritized flows

$S^L$      normalized serving rate for the prioritized flows

$S_i^C$      normalized serving rate for ith non-prioritized flow

$S_i^L$      normalized serving rate for ith prioritized flow

$S_t$      target normalized serving rate over the flows

$S_t^C$      second target normalized serving rate over the non-prioritized flows

$S_t^L$      first target normalized serving rate over the prioritized flows

$dW^C$      (aggregate) target serving rate weight for the non-prioritized flow(s)

$dW^L$      (aggregate) target serving rate weight for the prioritized flow(s)

$dW_i^C$      target serving rate weight for ith non-prioritized flow

$dW_i^L$      target serving rate weight for ith prioritized flow

$dqW_i^l$      target serving rate weight for ith queue with priority $l$

$dqW_i^b$      target serving rate weight for ith queue with priority b

$q^C$      queue for packets for non-prioritized flows

$q^L$      queue for packets for prioritized flows

$q_i^C$      queue for packets for ith non-prioritized flow

$q_i^L$      queue for packets for ith prioritized flow

C      link capacity

R      aggregate serving rate

$Tg^R$      target serving rate for the prioritized flows

$Tg_i^R$      target serving rate for ith prioritized flow

$Tg_i^{R,l}$      target serving rate for ith prioritized flow with priority $l$

$R^V$      rate for virtual queue

$R_i^V$      rate for ith virtual queue

$R_i^{V,l}$      rate for ith virtual queue with priority $l$

$dR$      maximum serving rate

$dR^L$    maximum serving rate for the prioritized flows

LIST OF MAIN ABBREVIATIONS

| | |
|---|---|
| AQM | Active Queue Management |
| EWMA | Exponential Weighted Moving Average |
| L4S | Low Loss, Low Latency and Scalable throughput |
| Q | Queue |
| VQ | Virtual Queue |
| ECN | Explicit Congestion Notification |

**Claims**

1. A network node, comprising:

   at least one queue for storing received packets, wherein the packets include first packets and second packets, wherein the first packets belong to at least one first flow, wherein the second packets belong to at least one second flow;
   a scheduler configured to schedule transmission of the stored packets via at least one network link and to extract the stored packets from the in at least one queue based on the scheduled transmission;
   a policer configured to mark some of the first packets with a congestion indicator before transmission;
   means for determining respective serving rates for the at least one first flow and the at least one second flow, a serving rate being determined for a flow and indicating a rate with which packets of the considered flow are extracted by the scheduler;
   means for computing, for at least one flow among the at least one first flow, a respective target serving rate to converge to, wherein a target serving rate for a flow is computed based on the serving rates;
   means for configuring the policer with a policer parameter for controlling an amount of packets to be marked in a flow among the at least one first flow, wherein the policer parameter is based on the target serving rate determined for the considered flow.

2. The network node of claim 1, comprising

   means for detecting a contention for at least one of the at least one second flow;
   means for detecting an overuse for at least one of the at least one first flow;
   wherein the target serving rate for a flow among the at least one first flow is either equal to a maximum serving rate configured for the at least one first flow when no contention and no overuse are detected or otherwise equal to a limited serving rate proportional to a target serving rate weight configured for the flow among the at least one first flow.

3. The network node of claim 2, comprising means for computing respective normalized serving rates for the at least one first flow and the at least one second flow, wherein a normalized serving rate computed for a given flow is equal to the serving rate of the given flow divided by the target serving rate weight configured for the given flow;
   wherein the limited serving rate is equal to a target normalized serving rate multiplied by the target serving rate weight configured for the flow among the at least one first flow, wherein the target normalized serving rate is computed based one or more of the normalized serving rates.

4. The network node of claim 3, comprising means for computing a first target normalized serving rate from the normalized serving rate(s) of the at least one first flow and a second target normalized serving rate from the normalized serving rate(s) of the at least one second flow,
   wherein the target normalized serving rate is either the minimum of the first and second target normalized serving rates when contention is detected and overuse is not detected or the first target normalized serving rate when no contention is detected and overuse is detected.

5. The network node of claim 3 or 4, wherein the first target normalized serving rate is the maximum of the normalized serving rates of the at least one first flow, multiplied by the maximum serving rate and divided by a total serving rate for the at least one first flow.

6. The network node of any of claims 3 to 5, wherein the second normalized serving rate is equal to the maximum of the normalized serving rates of the at least one second flow.

7. The network node of any of claims 2 to 6, wherein the means for detecting an overuse are configured to detect an overuse by comparing a total serving rate for the at least one first flow with the maximum serving rate.

8. The network node of any of claims 2 to 7, wherein the means for detecting a contention are configured to detect a contention in a given flow when the at least one queue accumulates, for the given flow, a number of packets greater than a threshold.

9. The network node of any of claims 2 to 8, wherein the means for detecting a contention are configured to detect a contention when the sum of the serving rates determined for the at least one first flow and the at least one second flow is above an upper transmission capacity configured of the at least one network link.

10. The network node of any of the preceding claims, comprising means for determining dynamically a capacity of the at least one network link, wherein the upper transmission capacity is determined by applying a threshold to the capacity.

11. The network node of any of the preceding claims, wherein the policer includes at least one virtual queue for processing packets of the at least one first flow and the policer parameter is a policer rate for the at least one virtual queue.

12. The network node of any of the preceding claims, wherein the policer includes a probability marker and the policer parameter is a marking probability for the probability marker.

13. The network node of any of the preceding claims, wherein the scheduler is configured to schedule transmission of the stored packets via at least one network link with priority for the at least one first flow with respect to the at least one second flow.

14. A method comprising:

storing packets in at least one queue, wherein the packets include first packets and second packets, wherein the first packets belong to at least one first flow, wherein the second packets belong to at least one second flow;
scheduling, by a scheduler, transmission of the stored packets via at least one network link and extracting the stored packets from the in at least one queue based on the scheduled transmission;
marking, by a policer, some of the first packets with a congestion indicator before transmission;
determining respective serving rates for the at least one first flow and the at least one second flow, a serving rate being determined for a flow and indicating a rate with which packets of the considered flow are extracted by the scheduler;
computing, for at least one flow among the at least one first flow, a respective target serving rate to converge to, wherein a target serving rate for a flow is computed based on the serving rates;
configuring the policer with a policer parameter for controlling an amount of packets to be marked in a flow among the at least one first flow, wherein the policer parameter is based on the target serving rate determined for the considered flow.

15. A network node comprising:

- at least one processor;
- at least one memory storing instructions that, when executed by the at least one processor, cause the network node to carry out:

storing packets in at least one queue, wherein the packets include first packets and second packets, wherein the first packets belong to at least one first flow, wherein the second packets belong to at least one second flow;
scheduling, by a scheduler, transmission of the stored packets via at least one network link and extracting the stored packets from the in at least one queue based on the scheduled transmission;

marking, by a policer, some of the first packets with a congestion indicator before transmission;
determining respective serving rates for the at least one first flow and the at least one second flow, a serving rate being determined for a flow and indicating a rate with which packets of the considered flow are extracted by the scheduler;
computing, for at least one flow among the at least one first flow, a respective target serving rate to converge to, wherein a target serving rate for a flow is computed based on the serving rates;
configuring the policer with a policer parameter for controlling an amount of packets to be marked in a flow among the at least one first flow, wherein the policer parameter is based on the target serving rate determined for the considered flow.

FIG. 1A

EP 4 757 274 A1

```
┌─────────────────────────────────────────┐
│   determining the serving rates for flows in   │⌐─151
│        traffic categories L and C        │
└─────────────────────────────────────────┘
                    │
                    ▼
┌─────────────────────────────────────────┐
│  detecting an overuse for at least one flow in  │⌐─152
│         traffic category L ?            │
└─────────────────────────────────────────┘
                    │
                    ▼
┌─────────────────────────────────────────┐
│  detecting a contention for at least one flow   │⌐─153
│         in traffic category C ?          │
└─────────────────────────────────────────┘
                    │
                    ▼
```

If no contention nor overuse, set the target serving rate $Tg^R$ to a maximum serving rate $dR^L$ configured for traffic category L ;
Otherwise, set $Tg^R$ to a limited serving rate proportional to a target serving rate weight $dW^L$ configured for traffic category L  ⌐─154

Configuring the policer with a policer parameter adapted to control an amount of packets to be marked for traffic category L before transmission  ⌐─155

FIG. 1B

200

230

Contention detection 131

Overuse detection 132

target serving rate computation 135

$Tg^R$

policer configuration 236

Flow rate control

Monitoring 120

110

$R^V = f(Tg^R)$

target serving rate weights $dW^L, dW^C$

Contention detection 131

Overuse detection 132

$R, C$

Scheduler 115

$R^C$

$R^L$

$sq^C$

$q^L$

$q^C$

$th^v$

212

$f_1^L$

$f_1^C$

111

Flow classifier

Flow control

network link 102

network link 101

FIG. 2

FIG. 3

FIG. 4

FIG. 5

FIG. 6

**FIG. 7**

710 — Receiving packets

720 — Scheduling transmission of the packets

730 — Marking the packets with congestion indicators

740 — Determining serving rates ($R_i^L$, $R_i^C$) for flows in traffic categories L and C

741 — Detecting contention

742 — Detecting overuse

743 — Computing normalized serving rates for flows in traffic category L and C

750 — Computing a respective target serving rate ($Tg_i^R$) for each of the flow(s) in traffic category L

760 — Configuring the policer with a policer parameter adapted for controlling the amount of packets to be marked in at lest one of the flows in traffic category L

FIG. 8

## EUROPEAN SEARCH REPORT

**Application Number**

EP 25 21 3535

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 114 233 A (INNOVINIUM INC) 12 May 2023 (2023-05-12) * paragraph [0102] - paragraph [0114] * * paragraph [0181] * * paragraph [0245] - paragraph [0249] * ----- | 1-15 | INV. H04L47/20 H04L47/22 H04L47/10 H04L47/31 H04L47/62 H04L47/11 |
| A | US 2024/039852 A1 (MATTHEWS WILLIAM BRAD [US] ET AL) 1 February 2024 (2024-02-01) * the whole document * ----- | 1-15 | |
| A | US 7 646 715 B2 (OUESLATI SARA [FR] ET AL) 12 January 2010 (2010-01-12) * the whole document * ----- | 1-15 | |

**TECHNICAL FIELDS SEARCHED (IPC)**

H04L

The present search report has been drawn up for all claims

| Place of search | Date of completion of the search | Examiner |
|---|---|---|
| The Hague | 20 April 2026 | Perrier, Samuel |

EPO FORM 1503 03.82 (P04C01)

## ANNEX TO THE EUROPEAN SEARCH REPORT
## ON EUROPEAN PATENT APPLICATION NO.

EP 25 21 3535

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2026

| Patent document cited in search report | | Publication date | Patent family member(s) | | Publication date |
|---|---|---|---|---|---|
| CN 116114233 | A | 12-05-2023 | CN | 116114233 A | 12-05-2023 |
| | | | EP | 4179655 A1 | 17-05-2023 |
| | | | US | 2022014473 A1 | 13-01-2022 |
| | | | US | 2022150174 A1 | 12-05-2022 |
| | | | US | 2023269192 A1 | 24-08-2023 |
| | | | US | 2024422104 A1 | 19-12-2024 |
| | | | WO | 2022015757 A1 | 20-01-2022 |
| US 2024039852 | A1 | 01-02-2024 | CN | 116671081 A | 29-08-2023 |
| | | | EP | 4241433 A1 | 13-09-2023 |
| | | | US | 2022150171 A1 | 12-05-2022 |
| | | | US | 2024039852 A1 | 01-02-2024 |
| | | | WO | 2022099084 A1 | 12-05-2022 |
| US 7646715 | B2 | 12-01-2010 | AT | E354903 T1 | 15-03-2007 |
| | | | CN | 1551580 A | 01-12-2004 |
| | | | DE | 602004004831 T2 | 08-11-2007 |
| | | | EP | 1478140 A1 | 17-11-2004 |
| | | | ES | 2282819 T3 | 16-10-2007 |
| | | | FR | 2854296 A1 | 29-10-2004 |
| | | | JP | 4474192 B2 | 02-06-2010 |
| | | | JP | 2004328753 A | 18-11-2004 |
| | | | US | 2004213265 A1 | 28-10-2004 |

EPO FORM P0459

For more details about this annex : see Official Journal of the European Patent Office, No. 12/82